# EUROPEAN PATENT APPLICATION

(11) **EP 2 025 400 A1**
(43) Date of publication of application: **18.02.2009**
(21) Application number: 07738574.8
(22) Date of filing: 14.03.2007
(51) Int. Cl.: B01J 29/12, C10G 47/20

(54) **HYDROCRACKING CATALYST, AND METHOD FOR PRODUCTION OF FUEL BASE MATERIAL**

(30) Priority: 31.03.2006 JP 2006097609
(71) Applicant: Nippon Oil Corporation, Tokyo 105-8412 (JP); JGC Catalysts and Chemicals Ltd., Kawasaki-shi, Kanagawa 210-0913 (JP)
(72) Inventor: SEKI, Hiroyuki, Yokohama-shi, Kanagawa 2310815 (JP); HIGASHI, Masahiro, Yokohama-shi, Kanagawa 2310815 (JP); SAITO, Sumio c/o JGC Catalysts and Chemicals Ltd., Kitakyusho-shi Fukuoka 8080027 (JP); KURODA, Ryuzo c/o JGC Catalysts and Chem. Ltd., Kitakyushu-shi Fukuoka 8080027 (JP); KAMEOKA, Takashi c/o JGC Catalysts and Chem. Ltd., Kitakyushu-shi Fukuoka 8080027 (JP)
(74) Representative: Grünecker, Kinkeldey, Stockmair & Schwanhäusser Anwaltssozietät
(86) International application number: PCT/JP2007/055104
(87) International publication number: WO 2007/114012

(57) **Abstract**

A hydrocracking catalyst that solves the above-described problem comprises a carrier containing ultra-stable Y-type zeolite obtained by the ultrastabilization of NaY-type zeolite and a metal from group VIII of the Periodic Table supported on this carrier, and is **characterized in that** the NaY-type zeolite has a peak in its X-ray diffraction pattern in the range of 2θ = 28.0° to 28.5° and 2θ = 15.0° to 16.0°, and the intensity ratio I₁/I₂ is no greater than 0.05, letting I₁ be the peak intensity observed in the range of 2θ = 28.0° to 28.5° and I₂ be the peak intensity observed in the range of 2θ = 15.0° to 16.0°.

## Description

### TECHNICAL FIELD

The present invention relates to a hydrocracking catalyst used for the hydrocracking of paraffinic hydrocarbon and to a method of producing a fuel base stock.

### BACKGROUND ART

Based on the idea of lessening the load on the environment, there has been a sharp upswing in demand in recent years for an environmentally friendly, environmentally responsive liquid fuel that has a low sulfur content and a low aromatic hydrocarbon content. The process of converting paraffinic hydrocarbon, e.g., wax, to a liquid fuel by the hydrocracking of paraffinic hydrocarbon over a catalyst is therefore under study in the fuel oil production sector as one method for producing environmentally friendly liquid fuels. The key to improving the economics of this process lies in the development of a high performance hydrocracking catalyst that exhibits a high cracking activity for paraffinic hydrocarbon, that can provide a useful middle distillate in high yields, and that can also achieve a lowering of the pour point for the gas oil fraction.

The hydrocracking of vacuum gas oils has already been commercialized and is an established technology with a history of some several decades. However, paraffinic hydrocarbon whose main component is normal-paraffin has a substantially different reactivity than that of vacuum gas oil and the direct diversion of catalysts for vacuum gas oil is therefore problematic. As a consequence, research and development targeted to the development of a high-performance catalyst for paraffinic hydrocarbon is currently being energetically pursued. Some reports have already appeared on the hydrocracking of paraffinic hydrocarbon, although they are few in number. For example, technology has been reported (refer, for example, to Patent Reference 1) that uses a catalyst of platinum supported on a carrier that contains amorphous silica-alumina; technology has also been reported (refer, for example, to Patent Reference 2) that uses a catalyst of platinum supported on a carrier that contains ultra-stable Y-type zeolite (in some instances referred to hereafter as USY zeolite).

[Patent Reference 1] Japanese Patent Application Laid-open No. Hei 6-41549
[Patent Reference 2] Japanese Patent Application Laid-open No. 2004-255241

### DISCLOSURE OF THE INVENTION

### PROBLEMS TO BE SOLVED BY THE INVENTION

However, given that recent pressures on fuel production costs are more severe than ever, even the prior art described above is not necessarily adequate, for the reasons given below, to the task of providing a satisfactory improvement in process economics.

Amorphous aluminosilicate catalysts, as typified by the catalyst according to Patent Reference 1, do exhibit a good selectivity for middle distillate in the hydrocracking of paraffinic hydrocarbon, but exhibit an unsatisfactory cracking activity. Yet when, for example, the reaction temperature is boosted or the liquid hourly space velocity is dropped in an effort to secure a satisfactory paraffinic hydrocarbon cracking rate, this ends up increasing energy consumption and/or reducing the productivity.

On the other hand, crystalline aluminosilicate catalysts, as typified by the catalyst according to Patent Reference 2, are better than amorphous aluminosilicate catalysts with regard to cracking activity. However, investigations by the inventors showed the former to be unsatisfactory with regard to delivering a high middle distillate yield and a lower pour point for the gas oil fraction. As a consequence, the current circumstance is that a catalyst that gives excellent results in all respects, i.e., cracking activity, middle distillate yield, and pour point of the gas oil fraction, has not yet appeared.

An object of the present invention, therefore, is to provide a hydrocracking catalyst that, even when used for the hydrocracking of paraffinic hydrocarbon, exhibits a high cracking activity and is also able to perform at high levels with regard to delivering a high middle distillate yield and a lower pour point for the gas oil fraction. An additional object of the present invention is to provide a method for producing a fuel base stock that uses this catalyst.

### MEANS FOR SOLVING THE PROBLEMS

As a result of focused research directed to solving the problem cited above, the present inventors discovered that both the production of middle distillate in high yields and achieving a lower pour point for the gas oil fraction are made possible, even at low reaction temperatures, by carrying out the hydrocracking of paraffinic hydrocarbon in the presence of a catalyst comprising a carrier that contains ultra-stable Y-type zeolite obtained by the ultrastabilization of a specific NaY-type zeolite and a specific metal supported on this carrier. The present invention was achieved based on this discovery.

That is, the hydrocracking catalyst of the present invention is a catalyst comprising a carrier containing ultra-stable Y-type zeolite obtained by the ultrastabilization of NaY-type zeolite and a metal from group VIII of the Periodic Table supported on this carrier, characterized in that the NaY-type zeolite has a peak in its powder X-ray diffraction pattern in the range of 2θ = 28.0° to 28.5° and 2θ = 15.0° to 16.0°, and the intensity ratio I₁/I₂ is no greater than 0.05, letting I₁ be the peak intensity observed in the range of 2θ = 28.0° to 28.5° and I₂ be the peak intensity observed in the range of 2θ = 15.0° to 16.0°.

The average particle size of the ultra-stable Y-type zeolite in the hydrocracking catalyst of the present invention is preferably 0.2 µm to 1.0 µm. This makes it possible to raise the cracking activity of the catalyst and to further lower the hydrocracking reaction temperature while still achieving a satisfactory increase in the middle distillate yield and a satisfactory lowering of the pour point of the gas oil fraction, and thus enables the process economics to be improved even more.

The content of the ultra-stable Y-type zeolite is preferably 0.5 mass% to 6 mass% with reference to the total quantity of the carrier. When this content is less than 0.5 mass%, the cracking activity is low and the fuel basestock yield tends to decline, whereas when this content exceeds 6 mass%, the cracking activity tends to become too high and the fuel basestock yield tends to decline.

The carrier in the hydrocracking catalyst of the present invention preferably additionally contains an amorphous solid acid. While the amorphous aluminosilicate catalysts as cited above have been considered to have a low cracking activity for paraffinic hydrocarbon, the additional presence of amorphous solid acid in the catalyst carrier of the catalyst of the present invention unexpectedly has the effect of raising the cracking activity of the catalyst. In addition, this can also bring about additional improvements in the level of the increase in middle distillate yield and the reduction in gas oil fraction pour point.

This amorphous solid acid is preferably at least one selected from the group consisting of silica-alumina, silica-zirconia, and alumina-boria.

In addition, from the viewpoint of obtaining a high yield of middle distillate, the mass ratio of the amorphous solid acid to the ultra-stable Y-type zeolite [amorphous solid acid]/[ultra-stable Y-type zeolite] is preferably at least 1 but no more than 60.

The present invention additionally provides a method for hydrotreating paraffinic hydrocarbon that is characterized by hydrocracking paraffinic hydrocarbon in the presence of the above-described hydrocracking catalyst of the present invention.

This hydrocracking method, by using the hydrocracking catalyst of the present invention, can bring about the hydrocracking of paraffinic hydrocarbon at lower temperatures while securing a satisfactory cracking rate. Moreover, a cracked product can be obtained under these conditions that has a satisfactorily high middle distillate content and that contains a gas oil fraction with a satisfactorily low pour point.

The present invention also provides a method of producing a fuel base stock that is characterized by hydrocracking paraffinic hydrocarbon in the presence of a hydrocracking catalyst of the present invention as described above and fractionally distilling the obtained cracked product to obtain a fuel base stock. This method for producing a fuel base stock, because it can very efficiently produce a high-quality fuel base stock in high yields, can improve the economics of the production of environmentally friendly liquid fuels.

### EFFECT OF THE INVENTION

The present invention provides a hydrocracking catalyst that, even when used for the hydrocracking of paraffinic hydrocarbon, exhibits a high cracking activity and is also able to perform at high levels with regard to delivering a high middle distillate yield and a lower pour point for the gas oil fraction. The present invention also provides a method for hydrotreating paraffinic hydrocarbon and a method for producing fuel base stock that use this catalyst.

### BRIEF DESCRIPTION OF THE DRAWINGS

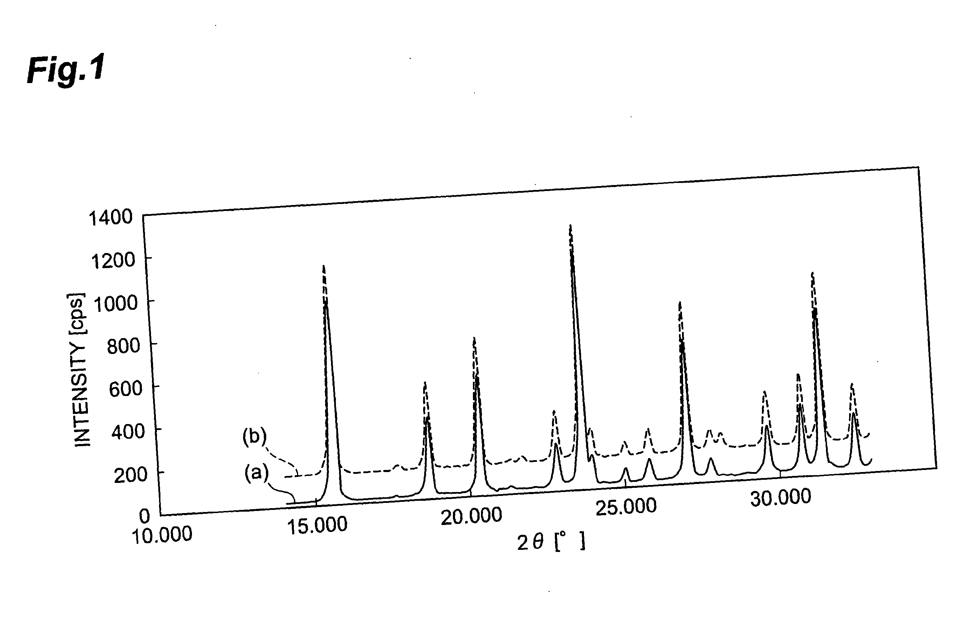

[Fig.1] Figure 1 shows (a) the powder X-ray diffraction pattern of the NaY-type zeolite with an intensity ratio I₁/I₂ of 0.016 that was used in the production of catalyst 1 and (b) the powder X-ray diffraction pattern of the NaY-type zeolite with an intensity ratio I₁/I₂ of 0.09 that was used in the production of catalyst 7.

### BEST MODE FOR CARRYING OUT THE INVENTION

Preferred embodiments are described hereinbelow of the paraffinic hydrocarbon hydrocracking catalyst according to the present invention, the method according to the present invention for hydrotreating paraffinic hydrocarbon using this catalyst, and the method according to the present invention for producing a fuel base stock using this catalyst.

### < The hydrocracking catalyst >

The hydrocracking catalyst of the present invention contains a carrier comprising ultra-stable Y-type (USY) zeolite obtained by the ultrastabilization of NaY-type zeolite and a metal from group VIII of the Periodic Table supported on this carrier, and the NaY-type zeolite has a peak in its powder X-ray diffraction pattern in the range of 2θ = 28.0° to 28.5° and 2θ = 15.0° to 16.0° and the intensity ratio I₁/I₂ is no greater than 0.05 letting I₁ be the peak intensity observed in the range of 2θ = 28.0° to 28.5° and I₂ be the peak intensity observed in the range of 2θ = 15.0° to 16.0°.

NaY-type zeolite that satisfies the conditions cited above can be obtained for example by the following manufacturing process. First, an aluminum source, sodium source, zirconium source and water are mixed together and aged to produce seeds (seed crystals). Separately, the aluminum source, sodium source, zirconium source and water are mixed to prepare a crystallised solution. Next, the obtained seeds are added to the crystallization solution without mechanical grinding, thoroughly mixed until homogeneous, and a reaction mixture is obtained by ageing at room temperature for 2-10 hours. At this time, the addition amount (mass) of seeds added to the crystallization solution is preferably 2 times or more, and more preferably 5 times or more, the amount normally added when manufacturing NaY-type zeolite.

Next, after passing through a colloid mill if required, the reaction mixture is aged by introducing into a crystallization bath, and crystallising. This ageing may be performed for example at 80-90°C, for 10-100 hours. Next, the obtained crystallised product is filtered, washed and dried so as to obtain NaY-type zeolite that satisfies the conditions given above.

The intensity ratio I₁/I₂ in the powder X-ray diffraction pattern of the NaY-type zeolite can be determined, for example, by carrying out X-ray diffraction measurements on a powder of the NaY-type zeolite obtained as described above, using a "RINT 1400" (product of Rigaku Corporation) as the measurement instrument and conditions of CuKα for the radiation source, 40 kV, and 150 mA.

The NaY-type zeolite used by the present invention preferably has a value of no more than 0.03 for the aforementioned intensity ratio I₁/I₂ and more preferably has a value of no more than 0.02. The yield of the fuel base stock tends to decline when the intensity ratio I₁/I₂ exceeds 0.03.

The NaY-type zeolite preferably has a surface area of at least 700 m²/g.

The aforementioned USY zeolite can be obtained, for example, by subjecting NaY-type zeolite that meets the conditions cited above to a hydrothermal treatment and/or an acid treatment. The execution of such a treatment enables adjustment of the silica/alumina ratio in the zeolite and also makes it possible to obtain USY zeolite in which new pores in the 20 to 100 Å range are formed, in addition to the microporous structures known as micropores no larger than 20 Å that Y-type zeolite inherently possesses.

More specifically, HY zeolite is obtained by subjecting NaY-type zeolite that satisfies the conditions cited above to ion-exchange with ammonium sulfate and a steam treatment. This HY zeolite is then subjected to ion-exchange with ammonium sulfate and a steam treatment to give USY zeolite. Subjecting this USY zeolite to an acid treatment with sulfuric acid then provides USY zeolite that is highly suitable as the USY zeolite present in the carrier of the hydrocracking catalyst of the present invention.

From the viewpoint of high cracking activity and USY zeolite forming properties, the average particle size of the USY zeolite in the present invention is preferably 0.2 µm to 1.0 µm and more preferably 0.3 µm to 0.5 µm.

The silica/alumina molar ratio in the USY zeolite (the molar ratio of silica to alumina) is preferably 20 to 140 and more preferably is 30 to 80.

The content of the USY zeolite in the carrier in the present invention is preferably no more than 6 mass% and more preferably is 0.5 to 6 mass% and even more preferably is 1.0 to 3 mass%, in each case with reference to the total quantity of the carrier.

The catalyst carrier in the present invention preferably additionally contains amorphous solid acid based on a consideration of achieving additional improvements in the performance of the paraffinic hydrocarbon hydrocracking catalyst.

The amorphous solid acid can be exemplified by silica-alumina, silica-titania, silica-zirconia, and alumina-boria. In the embodiment under consideration, the carrier preferably contains at least one selected from the group consisting of silica-alumina, silica-zirconia, and alumina-boria.

The mass ratio of the amorphous solid acid to the USY zeolite [amorphous solid acid]/[ultra-stable Y-type zeolite] in the catalyst carrier is preferably in the range from 0 to 80 and more preferably is in the range of 1 to 60.

The catalyst carrier in the present invention can be produced, for example, by molding a mixture containing binder, the ultra-stable Y-type zeolite obtained by the ultrastabilization of the above-described NaY-type zeolite, and optionally the above-described amorphous solid acid and calcining the obtained molding.

In this case, the rate of incorporation of the aforementioned ultra-stable Y-type zeolite is preferably no more than 6 mass% and more preferably is 0.5 to 6 mass% and even more preferably is 1.0 to 3 mass%, in each case with reference to the total quantity of the carrier.

In those cases where the carrier incorporates amorphous solid acid, the content of the amorphous solid acid is preferably 0.1 to 80 mass% and more preferably is 5 to 60 mass%, in each case with reference to the total quantity of the carrier.

In addition, when the carrier incorporates both USY zeolite and alumina-boria, the blending ratio between the USY zeolite and the alumina-boria (USY zeolite/alumina-boria) is preferably 0.03 to 0.1 as the mass ratio. When the carrier incorporates both USY zeolite and silica-alumina, the blending ratio between the USY zeolite and the silica-alumina (USY zeolite/silica-alumina) is preferably 0.03 to 0.2 as the mass ratio.

While the binder is not particularly limited, alumina, silica, titania, and magnesia are preferred and alumina is more preferred. The binder is incorporated preferably at 5 to 99 mass% and more preferably at 20 to 99 mass%, in each case with reference to the total quantity of the carrier.

The calcination temperature for the mixture is preferably in the range from 450 to 550°C, more preferably in the range from 460 to 530°C, and even more preferably in the range from 470 to 520°C. The calcination atmosphere is preferably air.

The group VIII metal is specifically exemplified by cobalt, nickel, rhodium, palladium, iridium, and platinum.

Among these active metals, the use is preferred of a noble metal selected from palladium and platinum, either as one species by itself or as a combination of two or more species.

These metals can be supported on the aforementioned carrier by the usual methods, such as impregnation or ion exchange. The amount of metal supported is not particularly limited, but the total amount of metal is preferably brought to 0.02 to 2 mass% with reference to the total quantity of the carrier.

The hydrocracking catalyst of the present invention can be applied to the hydrocracking of various petroleum-based and synthetic paraffinic hydrocarbons, but so-called FT wax, which is produced by the Fischer-Tropsch synthesis, is a particularly preferred paraffinic hydrocarbon.

### < The method for hydrocracking paraffinic hydrocarbon >

The method of the present invention for hydrocracking paraffinic hydrocarbon comprises the hydrocracking of paraffinic hydrocarbon in the presence of a hydrocracking catalyst of the present invention as described in the preceding.

The paraffinic hydrocarbon is preferably hydrocarbon in which the paraffin molecule content is at least 70 mol%. The number of carbons in the hydrocarbon molecules is not particularly limited, but hydrocarbon with about 15 to 100 carbons is generally used. The use in the hydrotreating method of the present invention of paraffinic hydrocarbon having at least 20 carbons and known as wax is generally preferred. That is, the hydrocracking catalyst of the present invention is effective for the hydrocracking of such waxes.

The method for producing the paraffinic hydrocarbon feedstock is not particularly limited, but the invention is preferably applied to so-called FT waxes produced by the Fischer-Tropsch synthesis.

Hydrocracking of the paraffinic hydrocarbon can employ conventional fixed bed reaction units and can be carried out under reaction conditions such as the following. The hydrogen pressure is preferably 0.5 to 12 MPa, more preferably 2.0 to 8.0 MPa, and even more preferably 2.0 to 4.0 MPa. The liquid hourly space velocity (LHSV) of the paraffinic hydrocarbon is preferably 0.1 to 10 h⁻¹, more preferably 0.3 to 5.0 h⁻¹, and even more preferably 1.0 to 3.0 h⁻¹. The hydrogen/oil ratio is not particularly limited, but is preferably 200 to 2000 NL/L and more preferably is 300 to 1000 NL/L.

In this Specification, "LHSV (liquid hourly space velocity)" denotes the volumetric flow rate of the feedstock oil at standard conditions (25°C, 101325 Pa) per volume of the catalyst layer in which the catalyst is packed. The unit of "h⁻¹" is the reciprocal hour. The "NL" that is the unit for the hydrogen volume in the hydrogen/oil ratio is the hydrogen volume (L) at normal conditions (0°C, 101325 Pa).

### < The method for producing a fuel base stock >

The cracked product obtained by hydrocracking can be fractionated by atmospheric distillation using, for example, a distillation column, into individual desired fractions such as, for example, naphtha (fraction with a boiling point no greater than 145°C), middle distillate (fraction with a boiling point from 145 to 360°C), and the gas oil fraction (fraction with a boiling point from 260 to 360°C).

### EXAMPLES

The present invention is described in greater detail herebelow by examples, but the present invention is not limited to these examples.

### <Catalyst production>

### (Catalyst 1)

First, a mixture was obtained by adding 1.391 kg of 39 mass% sodium aluminate (Na₂O content: 17 mass%, Al2O₃ content: 20 mass%) to 5.221 kg of a 41.95 mass% aqueous solution of sodium hydroxide with stirring. Next, this mixture was added to 11.250 kg of number 3 waterglass (SiO₂ content: 24 mass%, Na₂O content: 7.7 mass%) with stirring to give a seed composition. Next, the seed composition was stirred for 30 minutes, and left to stand at 30-35°C for 13 hours to give 17.862 kg of seeds (seed crystals). Next, 18.244 kg of a 23.6 mass% aqueous solution of aluminum sulfate (Al₂O₃ content: 7 mass%) was added with stirring, and 22.947 kg of number 3 waterglass (SiO₂ content: 24 mass%, Na₂O content: 7.7 mass%) was added with stirring to give a crystallization solution. The 17.862 kg of seeds obtained above were added to this crystallization solution, mixed thoroughly until homogeneous, and this was aged by stirring at room temperature for 3 hours to give a reaction mixture. Next, lumps in the reaction mixture were removed by passing through a colloid mill, introduced into a crystallization bath, and crystallised by ageing at a temperature of 95°C for 40 hours. Next, after cooling the crystallization bath, the crystallised product (actually, a coarse Y-type zeolite) was extracted, filtered, washed and dried to obtain approximately 7.3 kg of NaY-type zeolite. FIG 1 shows the powder x-ray diffraction pattern of this NaY-type zeolite. In FIG 1, a is the powder X- ray diffraction pattern of this NaY-type zeolite. In this powder x-ray diffraction pattern, the intensity ratio I₁/I₂ was 0.016, letting the peak intensity I₁ appearing within a range of 2 θ =28.0°-28.5°, to the peak intensity I₂ appearing within a range of 2 θ =15.0°-16.0°.

The NaY-type zeolite was then ion-exchanged with ammonium sulfate and subjected to a steam treatment to give HY zeolite. This HY zeolite was ion-exchanged with ammonium sulfate and subjected to a steam treatment to give coarse USY zeolite. This coarse USY zeolite was subjected to an acid treatment with sulfuric acid to give USY zeolite having an average particle size of 0.8 µm (silica/alumina ratio : 36) (this USY zeolite is referred to below as "USY zeolite-1").

The USY zeolite-1 prepared as described above and alumina binder were then mixed/kneaded at a weight ratio of 7 : 93 and the resulting mixture was molded into cylinders with a diameter of 1/16 inch (approximately 1.6 mm) and a length of 5 mm; calcination for 1 hour at 500°C then gave the carrier. Platinum was supported on this carrier by impregnating the carrier with an aqueous solution of dichlorotetraammine platinum(II). Drying this for 3 hours at 120°C followed by calcination for 1 hour at 500°C then gave catalyst 1. The amount of supported platinum was 0.8 mass% with reference to the carrier.

### (Catalyst 2)

A catalyst 2 was prepared by carrying out molding and calcination of the carrier, supporting of the metal, and drying and calcination as for catalyst 1, but in this case mixing/kneading USY zeolite-1, silica-alumina powder, and alumina binder at a weight ratio of 7 : 53 : 40 and using this mixture in place of the USY zeolite-1 and alumina binder mixture used for catalyst 1.

### (Catalyst 3)

A catalyst 3 was prepared by carrying out molding and calcination of the carrier, supporting of the metal, and drying and calcination as for catalyst 1, but in this case mixing/kneading USY zeolite-1, alumina-boria, and alumina binder at a weight ratio of 7 : 53 : 40 and using this mixture in place of the USY zeolite-1 and alumina binder mixture used for catalyst 1.

### (Catalyst 4)

A catalyst 4 was prepared by carrying out molding and calcination of the carrier, supporting of the metal, and drying and calcination as for catalyst 1, but in this case using USY zeolite with an average particle size of 0.4 µm (silica/alumina ratio : 36) (this USY zeolite is referred to below as "USY zeolite-2") in place of the USY zeolite-1 with an average particle size of 0.8 µm used for catalyst 1. This USY zeolite-2 was prepared using NaY-type zeolite obtained by doubling the seed amount (35.724kg) added to the crystallization solution in the production of the aforementioned NaY-type zeolite of Catalyst 1. The intensity ratio I₁/I₂ for this NaY-type zeolite was 0.016 letting I₁ be the peak intensity observed in its powder X-ray diffraction pattern in the range of 2θ = 28.0° to 28.5° and I₂ be the peak intensity observed in the range of 2θ = 15.0° to 16.0°.

### (Catalyst 5)

A catalyst 5 was prepared by carrying out molding and calcination of the carrier, supporting of the metal, and drying and calcination as for catalyst 1, but in this case mixing/kneading the USY zeolite-1 and alumina binder at a weight ratio of 3 : 97 and using the resulting mixture.

### (Catalyst 6)

A catalyst 6 was prepared by carrying out molding and calcination of the carrier, supporting of the metal, and drying and calcination as for catalyst 1, but in this case mixing/kneading USY zeolite-1, alumina-boria, and alumina binder at a weight ratio of 3 : 53 : 44 and using this mixture in place of the USY zeolite-1 and alumina binder mixture used for catalyst 1.

### (Catalyst 7)

NaY-type zeolite was prepared proceeding as in the preparation of the NaY-type zeolite for catalyst 1, but in this case without carrying out mechanical grinding of the seeds using a colloid mill prior to adding the seeds to the crystallization solution. NaY-type zeolite was obtained for which the intensity ratio I₁/I₂ in its powder X-ray diffraction pattern was 0.09 letting I₁ be the peak intensity observed in the range of 2θ = 28.0° to 28.5° and I₂ be the peak intensity observed in the range of 2θ = 15.0° to 16.0°. The powder X-ray diffraction pattern of this NaY-type zeolite is shown in Figure 1. Pattern b in Figure 1 is the powder X-ray diffraction pattern of this NaY-type zeolite.

This NaY-type zeolite was then ion-exchanged with ammonium sulfate and subjected to a steam treatment to give HY zeolite. This HY zeolite was ion-exchanged with ammonium sulfate and subjected to a steam treatment to give USY zeolite having an average particle size of 0.8 µm (silica/alumina ratio : 36) (this USY zeolite is referred to below as "USY zeolite-3").

A catalyst 7 was prepared by carrying out molding and calcination of the carrier, supporting of the metal, and drying and calcination as for catalyst 1, but in this case using the USY zeolite-3 prepared as described above in place of the USY zeolite-1 used for catalyst 1.

### (Catalyst 8)

A catalyst 8 was prepared by carrying out molding and calcination of the carrier, supporting of the metal, and drying and calcination as for catalyst 1, but in this case mixing/kneading USY zeolite-3, alumina-boria, and alumina binder at a weight ratio of 7 : 53 : 40 and using this mixture in place of the USY zeolite-1 and alumina binder mixture used for catalyst 1.

### (Catalyst 9)

A catalyst 9 was prepared by carrying out molding and calcination of the carrier, supporting of the metal, and drying and calcination as for catalyst 1, but in this case mixing/kneading USY zeolite-3, alumina-boria, and alumina binder at a weight ratio of 3 : 53 : 44 and using this mixture in place of the USY zeolite-1 and alumina binder mixture used for catalyst 1.

### < Hydrocracking of paraffinic hydrocarbon >

### (Example 1)

Catalyst 1 (200 mL) was packed in a fixed-bed, throughflow-type reactor and hydrocracking was carried out by feeding FT wax (C₂₁-₈₀ normal-paraffin content : 95 mass%) as the paraffinic hydrocarbon; this hydrocracking was carried out in a hydrogen current under the following conditions: hydrogen pressure = 5 MPa, LHSV for the FT wax = 2.0 h⁻¹, hydrogen/oil ratio = 600 NL/L.

The reaction temperature was 325°C at the point at which its adjustment brought the cracking rate (the weight% of the cracked product with reference to the FT wax where the cracked product is taken to be the fraction with a boiling point up to and including 360°) of the FT wax under the above-described conditions to 80 mass%.

A middle distillate (fraction with a boiling point from 145 to 360°C) was then obtained by precision distillation of the hydrocracked product obtained by the hydrocracking. The middle distillate yield (mass%) was determined with reference to the starting wax. In addition, the pour point of the gas oil fraction (fraction with a boiling point from 260 to 360°C) in the obtained middle distillate was determined by the method described in JIS K-2269. The results are shown in Table 1.

### (Example 2)

A middle distillate was obtained by hydrotreating FT wax as in Example 1, but in this case carrying out hydrocracking as in Example 1 using catalyst 2 in place of catalyst 1. The reaction temperature was 300°C at the point at which its adjustment brought the cracking rate of the FT wax to 80 mass%. The obtained middle distillate and gas oil fraction were analyzed as in Example 1. The results are shown in Table 1.

### (Example 3)

A middle distillate was obtained by hydrotreating FT wax as in Example 1, but in this case carrying out hydrocracking as in Example 1 using catalyst 3 in place of catalyst 1. The reaction temperature was 305°C at the point at which its adjustment brought the cracking rate of the FT wax to 80 mass%. The obtained middle distillate and gas oil fraction were analyzed as in Example 1. The results are shown in Table 1.

### (Example 4)

A middle distillate was obtained by hydrotreating FT wax as in Example 1, but in this case carrying out hydrocracking as in Example 1 using catalyst 4 in place of catalyst 1. The reaction temperature was 321°C at the point at which its adjustment brought the cracking rate of the FT wax to 80 mass%. The obtained middle distillate and gas oil fraction were analyzed as in Example 1. The results are shown in Table 1.

### (Example 5)

A middle distillate was obtained by hydrotreating FT wax as in Example 1, but in this case carrying out hydrocracking as in Example 1 using catalyst 5 in place of catalyst 1. The reaction temperature was 334°C at the point at which its adjustment brought the cracking rate of the FT wax to 80 mass%. The obtained middle distillate and gas oil fraction were analyzed as in Example 1. The results are shown in Table 1.

### (Example 6)

A middle distillate was obtained by hydrotreating FT wax as in Example 1, but in this case carrying out hydrocracking as in Example 1 using catalyst 6 in place of catalyst 1. The reaction temperature was 301°C at the point at which its adjustment brought the cracking rate of the FT wax to 80 mass%. The obtained middle distillate and gas oil fraction were analyzed as in Example 1. The results are shown in Table 1.

### (Comparative Example 1)

A middle distillate was obtained by hydrotreating FT wax as in Example 1, but in this case carrying out hydrocracking as in Example 1 using catalyst 7 in place of catalyst 1. The reaction temperature was 338°C at the point at which its adjustment brought the cracking rate of the FT wax to 80 mass%. The obtained middle distillate and gas oil fraction were analyzed as in Example 1. The results are shown in Table 1.

### (Comparative Example 2)

A middle distillate was obtained by hydrotreating FT wax as in Example 1, but in this case carrying out hydrocracking as in Example 1 using catalyst 8 in place of catalyst 1. The reaction temperature was 314°C at the point at which its adjustment brought the cracking rate of the FT wax to 80 mass%. The obtained middle distillate and gas oil fraction were analyzed as in Example 1. The results are shown in Table 1.

### (Comparative Example 3)

A middle distillate was obtained by hydrotreating FT wax as in Example 1, but in this case carrying out hydrocracking as in Example 1 using catalyst 9 in place of catalyst 1. The reaction temperature was 332°C at the point at which its adjustment brought the cracking rate of the FT wax to 80 mass%. The obtained middle distillate and gas oil fraction were analyzed as in Example 1. The results are shown in Table 1.

**[Table 1]**

| | reaction temperature at a cracking rate of 80 mass% (°C) | middle distillate yield (mass%) | pour point of the gas oil fraction (°C) |
|---|---|---|---|
| Example 1 | 325 | 55.8 | -20. 0 |
| Example 2 | 300 | 56.5 | -27. 5 |
| Example 3 | 305 | 60.6 | -25. 0 |
| Example 4 | 321 | 57.4 | -20. 0 |
| Example 5 | 334 | 57.7 | -20. 0 |
| Example 6 | 301 | 62. 1 | -25. 0 |
| Comparative Example 1 | 338 | 54.2 | -20. 0 |
| Comparative Example 2 | 314 | 53.9 | -20. 0 |
| Comparative Example 3 | 332 | 55.6 | -20. 0 |

As shown in Table 1, the hydrotreating method of Examples 1 to 6, which employed a hydrocracking catalyst prepared using NaY-type zeolite for which the intensity ratio I₁/I₂ in the powder X-ray diffraction pattern thereof was no greater than 0.05 letting I₁ be the peak intensity observed in the range of 2θ = 28.0° to 28.5° and I₂ be the peak intensity observed in the range of 2θ = 15.0° to 16.0°, demonstrated the ability to produce high yields of middle distillate from paraffinic hydrocarbon at lower reaction temperatures and the ability to also provide a satisfactorily low pour point for the gas oil fraction. It was thereby shown that the present invention can provide a hydrocracking catalyst that, even with a paraffinic hydrocarbon feedstock, exhibits a high cracking activity and is also able to perform at high levels with regard to delivering a high middle distillate yield and a lower pour point for the gas oil fraction.

### INDUSTRIAL APPLICABILITY

The present invention provides a hydrocracking catalyst that, even when used for the hydrocracking of paraffinic hydrocarbon, exhibits a high cracking activity and is also able to perform at high levels with regard to delivering a high middle distillate yield and a lower pour point for the gas oil fraction. The present invention also provides a method for hydrotreating paraffinic hydrocarbon and a method for producing fuel base stock that use this catalyst.

## Claims

1. A hydrocracking catalyst comprising a carrier containing ultra-stable Y-type zeolite obtained by the ultrastabilization of NaY-type zeolite and a metal from group VIII of the Periodic Table supported on this carrier,
said hydrocracking catalyst being **characterized in that** said NaY-type zeolite has a peak in its powder X-ray diffraction pattern in the range of 2θ = 28.0° to 28.5° and 2θ = 15.0° to 16.0°, and the intensity ratio I₁/I₂ is no greater than 0.05, letting I₁ be the peak intensity observed in the range of 2θ = 28.0° to 28.5° and I₂ be the peak intensity observed in the range of 2θ = 15.0° to 16.0°.

2. The hydrocracking catalyst according to claim 1, **characterized in that** the ultra-stable Y-type zeolite has an average particle size of 0.2 µm to 1.0 µm.

3. The hydrocracking catalyst according to claim 1 or 2, **characterized in that** the content of the ultra-stable Y-type zeolite is 0.5 mass% to 6 mass% with reference to the total quantity of the carrier.

4. The hydrocracking catalyst according to any of claims 1 to 3, **characterized in that** the carrier additionally contains an amorphous solid acid.

5. The hydrocracking catalyst according to claim 4, **characterized in that** the amorphous solid acid is at least one selected from the group consisting of silica-alumina, silica-zirconia, and alumina-boria.

6. The hydrocracking catalyst according to claim 4 or 5, **characterized in that** the mass ratio of the amorphous solid acid to the ultra-stable Y-type zeolite [amorphous solid acid]/[ultra-stable Y-type zeolite] is at least 1 but no more than 60.

7. A method of producing a fuel base stock, comprising:
hydrocracking paraffinic hydrocarbon in the presence of the hydrocracking catalyst according to any of claims 1 to 6; and
fractionally distilling the obtained cracked product to obtain a fuel base stock.
